# DEMANDE DE BREVET EUROPEEN

(11) **EP 1 912 317 A1**
(43) Date de publication de la demande: **16.04.2008**
(21) Numéro de dépôt: 07360044.7
(22) Date de dépôt: 05.10.2007
(51) Int. Cl.: H02K 23/04

(54) **Moteur à aimants permanents à courant continu et utilisation**

(30) Priorité: 13.10.2006 FR 0609011
(71) Demandeur: MANTION S.A., 25006 Besancon (FR)
(72) Inventeur: Schnoebelen, Denis, 25006 Besancon (FR)
(74) Mandataire: Munier, Laurent

(57) **Abrégé**

Le moteur (1) à aimants permanents (17) est à courant continu de tension d'alimentation de référence d'au moins six volt comprenant au moins un stator (6), un rotor (5), un collecteur (16), un porte-balai (9), des éléments de paliers supérieur (8) et inférieur (11).

Ledit rotor (5) à huit encoches sans y être limité est de diamètre réduit avec des tôles de 8mm d'épaisseur et un bobinage filaire de 0,355 mm de diamètre au pas diamétral à raison de quarante six tours par bobine avec un accrochage direct alpha sur un collecteur en cuivre (16) à crochets à huit lames sans y être limité solidaire de l'axe moteur (13), le stator (6) à deux pôles à aimants permanents est réalisé avec des aimants permanents (17) composés de tuiles inclinées de 120°, de longueur de 15 mm et d'épaisseur de 4,4 mm.

Utilisation entre autres applications dudit moteur (1) lié à une source d'alimentation électrique autonome de secours ou de relais et/ou sur secteur, à un boîtier réducteur de vitesse, à un boîtier de regroupement de dispositifs électrique et/ou électronique pour l'asservissement d'un système d'actionnement d'au moins un volet coulissant.

## Description

La présente invention concerne un moteur à aimants permanents à courant continu basse tension et son utilisation.

En premier lieu l'invention, elle se rapporte à un moteur à courant continu d'alimentation basse tension de référence d'au moins 6 volts.

L'homme du métier connaît de tels moteurs alimentés en basse tension.

Les moteurs basse tension sont généralement alimentés en 6 volts, en 12 volts ou 24 volts.

Ceux de 6 volts ont des applications très spécifiques, peu gourmandes en effort et en énergie et ne peuvent pas être appliqués pour l'actionnement de mobiles lourds et de grande tailles. En conséquence, ils ne sont pas utilisés pour des applications, entre autres dans les domaines du bâtiments pour l'actionnement de panneaux coulissants.

Les moteurs de 12 volts ont des applications multiples et actionnent des mobiles lourds et de grandes tailles. Ils se déclinent pourtant en de multiples variantes pour s'adapter à toutes sortes de situations. Pour des actionnements performants et endurants, ce sont des moteurs chers et sensibles de par leur qualité de rendement et leur qualité de fonctionnement. Leur application se retrouve entre autres dans le domaine du bâtiment, de l'automobile et de l'aéronautique.

Lesdits moteurs 12 volts sont encombrants et nécessitent l'adaptation de leur environnement pour les fixer et les loger. Leur alimentation se fait par transformation de l'énergie électrique du réseau public ou par des batteries d'autant plus encombrantes que la performance est grande.

Une alimentation autonome en 12 volts ne permettrait pas de garantir des rendements performants et endurants. A ce jour, il n'y a pas d'application connue pour l'actionnement de volets par exemple.

L'invention a pour objectif de réaliser un moteur de 6 volts présentant les qualités connues en matière de rendement, de performance et d'endurance atteintes par les moteurs 12 volts.

La présente invention a aussi pour objet l'utilisation de moteurs de 6 volts dans les applications antérieurement connues ou non.

Un autre objectif de l'invention est de réaliser un moteur de 6 volts capable de telles performances et applications en alimentation autonome avec des moyens connus tels que piles, batteries et panneaux solaires.

Le but de l'invention est de réaliser un moteur à encombrement réduit, sécurisé, inviolable, étanche dont les performances dans les applications du domaine du bâtiment par exemple ne sont pas altérés par des alimentations autonomes.

Avantageusement, un moteur de cette conception évite par sa compacité de devoir modifier, adapter l'environnement dans l'application envisagée. L'étanchéité et l'inviolabilité évitent l'utilisation obligée des dispositifs de l'art antérieur adaptés à ces effets, tels que carters, boîtiers, joints multiples.

Avec ces nouveaux avantages, et l'avantage de la compacité recherchée, le moteur peut être installé et fixé sans autres précautions ou contraintes.

En outre, ledit moteur conçu avec ces caractéristiques devient un élément de sécurité. La conception dudit moteur permet de réduire le nombre de pièces et de simplifier la fabrication, le procédé, en conséquence permet de réduire les coûts depuis l'origine jusqu'à l'utilisation dans les applications de panneaux coulissants.

De plus, l'invention met le moteur à la portée du grand public comme des professionnels pour des applications nouvelles dans des domaines où des efforts, taille et poids à actionner n'autorisaient pas l'usage de moteurs de 6 volts de types connus qui comprennent au moins un stator, un rotor, un collecteur, un porte-balai, des paliers supérieur et inférieur.

L'alimentation en courant à 6 volts de tension et les autres avantages associés permettent l'usage de dispositifs de sécurité associés et une alimentation autonome avec des moyens du commerce fiable, panneaux solaires pour relayer l'alimentation normale à partir du secteur public, batteries, piles, dynamo, etc. pour l'alimentation de secours.

Associé à un réducteur un unique moteur peut réaliser un standard d'utilisation pour toute sorte d'applications.

Avantageusement, l'utilisateur, l'installateur, le fabricant de dispositif de motorisation font l'économie de stockage de moteurs adaptés et de réduction des coûts de composants divers et variés. Portant un gain de temps à la fabrication et à la mise en oeuvre de dispositifs de motorisation.

L'invention sera mieux comprise à la lecture de la description des figures donnée à titre non limitatif.

La Fig. 1 représente en élévation le moteur selon l'invention lié à d'autres dispositifs, par exemple un boîtier réducteur de vitesse.

La Fig. 2 est une courbe identitaire du moteur de la Fig. 1 caractérisée par le rendement, la puissance, l'intensité et la vitesse en unités normalisées.

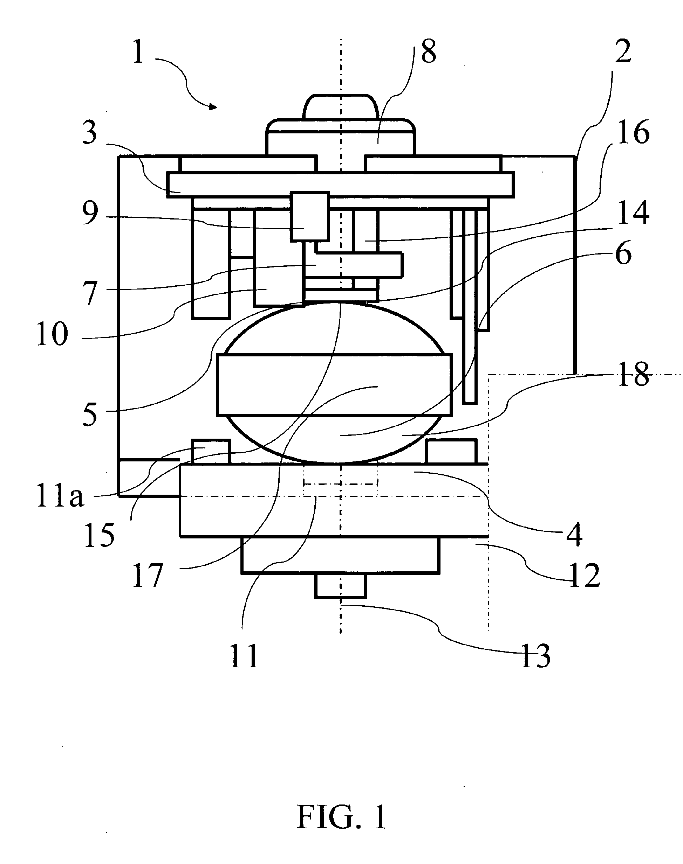

Le moteur 1 représenté sur la Fig. 1 comprend un carter 2 fermé par des flasques supérieur 3 et inférieur 4. Il comprend également un rotor 5 et un stator 6.

Ainsi le moteur 1 comporte ledit rotor 5 qui est de diamètre réduit à huit encoches.

Le flasque supérieur 3 du carter 2 du moteur 1 est réalisé d'un seul tenant monobloc comportant à la fois les moyens de bridage 7 du moteur 1, le palier 8 à roulement à bille, le porte balai 9 et le moyen de connexion inviolable 10 du cordon d'alimentation (non représenté) serti dans le flasque 3.

La structure monobloc du flasque supérieur 3 réalisée selon l'invention est compacte, étanche, sécurisée et inviolable, de coût réduit. Elle s'adapte par emboîtement et positionnement auto-ajustable au carter 2 du stator 6.

Le flasque inférieur 4 ferme le carter 2 du stator 6 et est réalisée d'une seule pièce monobloc comportant un palier inférieur 11 à rotule en bronze fritté. Le flasque 4 comporte les moyens de bridage 11a du moteur 1 ainsi que les moyens de positionnement auto ajustables indexés (non représentés) sur une embase 12, cette caractéristique permet de concevoir un flasque inférieur 4 interchangeable pour rendre le moteur 1 compatible à tous types d'applications.

Le rotor 5 à huit encoches comporte sur l'axe moteur 13 des tôles de 8 mm d'épaisseur et un bobinage 14 en fil émaillé de 0,355 mm de diamètre au pas diamétral à raison de 46 tours par bobine avec un accrochage direct alpha 15 sur un collecteur 16 en cuivre à crochets à huit lames avec un calage angulaire à 0°.

Le stator 6 est à deux pôles à aimants permanents 17 réalisés avec des tuiles inclinées à 120° de longueurs de 15 mm et d'épaisseur de 4 mm et d'un bobinage 18 avec un fil aux caractéristiques identiques à celui 14 du rotor 6.

Selon d'autres caractéristiques :
- en vue de rendre le moteur 1 selon l'invention étanche et adapté à une connexion inviolable, il comprend une pièce supérieure formant palier 8, flasque 3, porte-balai 9 moyens de connexion 10 et moyens de bridage 7 venant s'adapter hermétiquement sur une enveloppe cylindrique formant carter 2 ;
- le moteur présente en partie inférieure une assise formant flasque inférieur 4 comportant au moins des moyens de bridage 11a, un palier inférieur 11 et des moyens de positionnement et d'indexation et de solidarisation du moteur 1 sur un support extérieur.

Suivant un second mode de réalisation et dans le but d'adapter et lier le moteur 1 à un ensemble, ledit moteur 1 présente en partie inférieure une assise ou flasque inférieur 4 comportant des moyens de positionnement, d'indexation et de solidarisation à un boîtier indépendant de la structure du moteur 1, ledit boîtier comportant le palier inférieur 11 et les moyens de bridage 11 a.

Dans ce second mode de réalisation, le flasque inférieur 4 du moteur 1 est monobloc avec les seuls moyens étanches de fixation et de positionnement ajustables sur le carter 2 du stator 6, ce qui autorise avantageusement l'usage d'un palier externe comportant les moyens de bridage de tout autre ensemble associé tel que le boîtier.

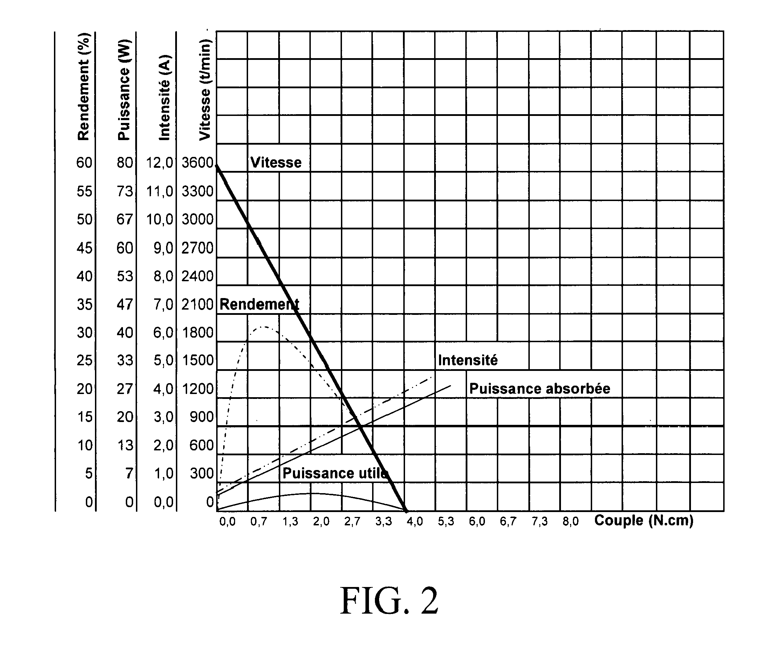

Ainsi conçu, le moteur 1 exprime un rendement tel que représenté Fig. 2 de telle sorte que le moteur de 6 volts associé à des moyens idoines connus ou non d'actionnement de panneaux mobiles lourds et/ou de tailles conséquentes permet un fonctionnement performant et durable et permet l'actionnement autonome de sécurité et de fonctionnement via une alimentation autonome.

L'invention a encore pour objet une utilisation d'un moteur 1 conforme à l'une quelconque des formes de réalisation décrites ci-dessus lié à une unité électronique d'alimentation et de gestion et à un boîtier réducteur de vitesse pour l'asservissement d'un système d'actionnement d'un volet coulissant.

Associé à un réducteur modulable selçon les charges de l'application, un unique moteur 1 peut réaliser un standard d'utilisation pour toute sorte d'applications.

Avantageusement, l'utilisateur, l'installateur, le fabricant de dispositif de motorisation font l'économie de stockage de moteurs adaptés et de coûteux composants divers et variés.

Bien que l'invention ait été décrite en liaison avec des structures particulières, elle n'y est nullement limitée et on peut y apporter de nombreuses variantes. Comme par exemple assemblage sur flasque 4 inférieur unique, monobloc, interchangeable et/ou étanche. Il est encore possible d'inverser les flasques 3 et 4 ou de modifier la composition des éléments des flasques 3 et 4.

Les combinaisons des différentes réalisations représentées sur le dessin ou décrites ci-dessus ne sortent pas du cadre de l'invention.

### Signes de référence

- 1: moteur
- 2: carter
- 3: flasque supérieur
- 4: flasque inférieur
- 5: rotor
- 6: stator
- 7: moyens de bridage
- 8: palier supérieur
- 8a: moyens de bridage
- 9: porte balai
- 10: moyens de connexion
- 11: palier inférieur
- 11 a: moyens de bridage
- 12: embase
- 13: axe moteur
- 14: bobinage
- 15: accrochage direct alpha
- 16: collecteur
- 17: aimants permanents
- 18: bobinage

Les signes de référence insérés après les caractéristiques techniques mentionnées dans les revendications ont pour seul but de faciliter la compréhension de ces dernières et n'en limitent aucunement la portée.

## Revendications

1. Moteur (1) à aimants permanents à courant continu de tension d'alimentation de référence d'au moins 6 volts comprenant au moins un stator (6), un rotor (5), un collecteur (16), un porte-balai (9), des éléments de palier supérieur (8) et inférieur (11) **caractérisé en ce que** :
- le rotor (5) est de diamètre réduit à huit encoches étant réalisé sur l'axe (13) du moteur (1) avec des tôles de 8 mm et un bobinage (14) au pas diamétral à raison de 46 tours par bobine avec un accrochage direct alpha sur le collecteur (16),.
- le stator (6) est à deux pôles à, aimants permanents (17) réalisé avec des tuiles inclinées à 120° de longueur de 15 mm et d'épaisseur 4 mm et d'un bobinage (18),
- le bobinage (14, 18) dudit rotor (5) et stator (6) étant formé de fils émaillés de diamètre 0,355 mm.

2. Moteur (1) selon la revendication 1, dans lequel le collecteur (16) est réalisé en cuivre avec accrochage à huit lames avec un calage angulaire à 0 degré.

3. Moteur (1) selon l'une des revendications précédentes, comprenant une pièce supérieure formant palier (8), flasque (3), porte-balai (9), moyens de connexion (10) et moyens de bridage (7) venant s'adapter hermétiquement sur une enveloppe cylindrique formant carter (2).

4. Moteur (1) selon l'une des revendications précédentes présentant en partie inférieure une assise formant flasque inférieure (4) comportant au moins des moyens de bridage (11a), un palier inférieur (11) et des moyens de positionnement, d'indexation et de solidarisation du moteur (1) sur un support extérieur.

5. Moteur (1) suivant la revendication 1, 2 ou 3, présentant en partie inférieure une assise ou flasque (4) comportant des moyens de positionnement, d'indexation et de solidarisation à un boîtier indépendant de la structure du moteur (1), ledit boîtier présentant le palier inférieur (11) et les moyens de bridage (11a).

6. Utilisation d'un moteur (1) conforme à l'une quelconque des revendications précédentes lié à une unité électronique d'alimentation et de gestion et un boîtier réducteur de vitesse pour l'asservissement d'un système d'actionnement d'un volet coulissant.
